# EUROPÄISCHE PATENTSCHRIFT

(11) **EP 1 240 054 B1**
(45) Veröffentlichungstag und Bekanntmachung des Hinweises auf die Patenterteilung: **16.11.2005**
(21) Anmeldenummer: 00974434.3
(22) Anmeldetag: 21.10.2000
(51) Int. Cl.: B60R 16/02, H04L 12/413

(54) **SCHALTUNGSANORDNUNG ZUR AKTIVIERUNG EINES CAN-BUS-STEUERGERÄTES**
CIRCUIT FOR ACTIVATING A CAN (CAR AREA NETWORK) BUS CONTROL UNIT
DISPOSITIF DE COMMUTATION SERVANT A ACTIVER UNE UNITE DE COMMANDE BUS CAN ( i CAR AREA NETWORK /i )

(30) Priorität: 10.12.1999 DE 19959487; 10.03.2000 DE 10011775
(43) Veröffentlichungstag der Anmeldung: 18.09.2002
(73) Patentinhaber: Continental Teves AG & Co. oHG, 60488 Frankfurt (DE)
(72) Erfinder: FEY, Wolfgang, 65527 Niedernhausen (DE); LINK, Leonhard, 85665 Moosach (DE)
(86) Internationale Anmeldenummer: PCT/EP2000/010382
(87) Internationale Veröffentlichungsnummer: WO 2001/042054

(56) Entgegenhaltungen:
- EP-A- 0 870 648
- US-A- 5 751 746

## Beschreibung

Die Erfindung betrifft eine Schaltungsanordnung zur Aktivierung eines Steuergerätes wie zum Beispiel eines ABS-Reglers in einem Fahrzeug über einen CAN-Bus bei abgeschalteter Zündung. Der Oberbegriff des Anspruchs 1 ist aus der EP 0 870 648 bekannt.

In modernen Fahrzeugen sind im allgemeinen sämtliche elektrischen und elektronischen Steuergeräte, ESP-Sensoren oder andere Komponenten über einen standardisierten CAN- (Car Area Network) Bus miteinander verbunden. Die Kommunikation dieser Einheiten untereinander wird über einen zentralen CAN-Bus-Controller organisiert, wobei jeder Einheit ein CAN-Rechner zur Erzeugung eines entsprechenden Datenprotokolls sowie ein CAN-Bus Transceiver zugeordnet ist, über den die Einheit an den CAN-Bus angeschaltet ist.

Wenn das Fahrzeug nicht in Betrieb ist, sind der CAN-Bus und die genannten Einheiten ganz oder teilweise inaktiv, d.h. sie befinden sich in einem Schlafzustand und werden erst durch ein Einschalten der Zündung wieder voll aktiv. Es hat sich jedoch als wünschenswert erwiesen, bestimmte Einheiten, wie zum Beispiel das ABS-Steuergerät, auch bei abgeschalteter Zündung aktivieren zu können, und zwar zum Beispiel durch ein Lösen der Zentralverriegelung oder ein auf andere Weise erzeugtes "Aufwecksignal".

Der Erfindung liegt deshalb die Aufgabe zugrunde, eine Schaltungsanordnung der eingangs genannten Art zu schaffen, mit der ein Steuergerät (wie ein ABS-Regler oder ein anderes Steuergerät oder auch ESP-Sensoren usw.) bei abgeschalteter Zündung über den CAN-Bus gezielt und zuverlässig aktiviert werden kann.

Gelöst wird diese Aufgabe mit einer Schaltungsanordnung gemäß Anspruch 1, die einen ersten Eingang für ein logisches Aktivierungssignal für das Steuergerät, ein Eingangsfilter zur Unterdrückung von Störimpulsen in dem Aktivierungssignal und eine Einrichtung zur Erzeugung eines das Steuergerät aktivierenden Ausgangssignals, wenn innerhalb einer vorbestimmbaren Zeitdauer eine vorbestimmbare Anzahl von Aktivierungssignalen erfasst wird.

Ein besonderer Vorteil dieser Lösung besteht darin, dass eine unbeabsichtigte Aktivierung durch Störsignale nahezu ausgeschlossen ist. Weiterhin ist die Schaltungsanordnung mit wenigen logischen Bauelementen realisierbar, so dass der Stromverbrauch sehr gering gehalten werden kann.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung einer bevorzugten Ausführungsform anhand einer Zeichnung. Es zeigt:
Fig. 1 ein Blockschaltbild einer solchen Ausführungsform und
Fig. 2 ein Zeitdiagramm verschiedener Spannungsverläufe in der in Figur 1 gezeigten Schaltung.

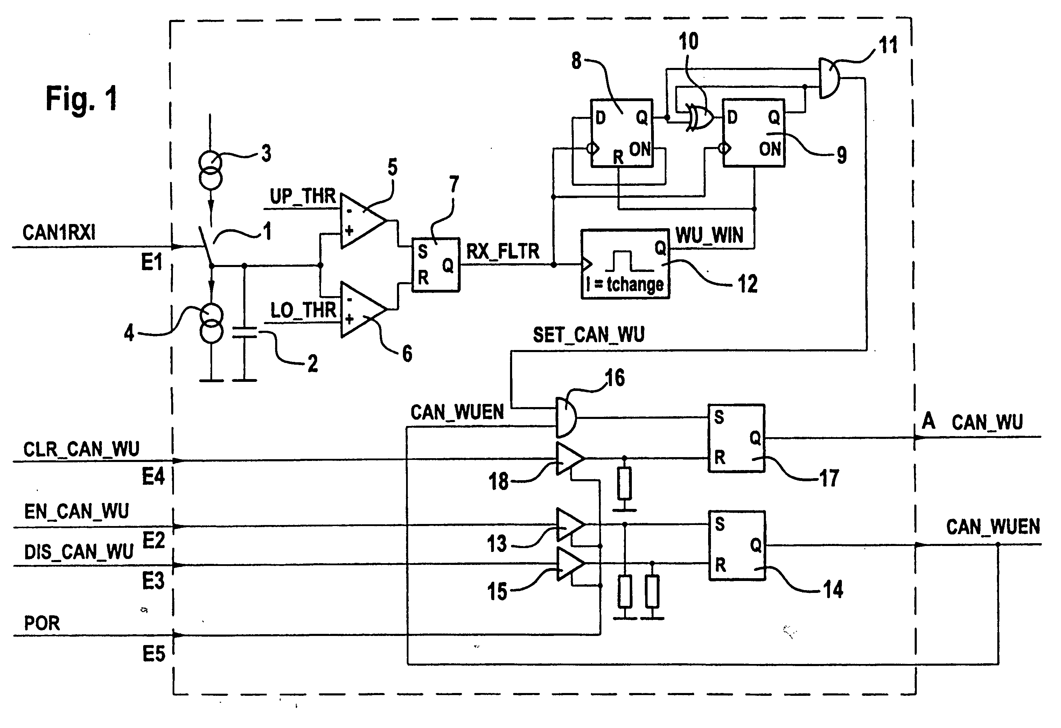

Figur 1 zeigt eine erfindungsgemäße Schaltungsanordnung, die zur Anwendung bei der Aktivierung eines ABS-Reglers vorgesehen ist, wenn der CAN-Bus bei abgeschalteter Zündung im wesentlichen deaktiviert ist. Die Schaltung wird zwischen den eigentlichen ABS-Regler und einen diesem zugeordneten CAN-Bus-Transceiver (nicht dargestellt) geschaltet, der wiederum in bekannter Weise mit dem CAN-Bus verbunden ist.

Um eine gezielte Aktivierung des ABS-Reglers als angesprochener CAN-Bus-Einheit bei abgeschalteter Zündung zu ermöglichen, muss das von dem CAN-Bus-Transceiver empfangene Aktivierungssignal ("Aktivierungswunsch") identifiziert und geprüft werden, so dass der ABS-Regler nicht unbeabsichtigt durch Störsignale aktiviert wird.

zu diesem Zweck wird das an einem ersten Eingang E1 der Schaltung anliegende Eingangssignal CAN1RXI, das einen Aktivierungswunsch darstellt, einer dreistufigen Prüfung unterzogen und nur dann am Ausgang A der Schaltung ein den ABS-Regler tatsächlich aktivierendes Ausgangssignal erzeugt, wenn das Eingangssignal diese Prüfung erfolgreich durchlaufen hat. Die Schaltung wird durch einen Mikrocontroller über weitere Eingänge in ihren Betriebszustand versetzt bzw. deaktiviert sowie nach einer Erzeugung des Ausgangssignals wieder in den vorherigen Zustand zurückgesetzt.

Das Eingangssignal CAN1RXI wird von dem zugeordneten CAN-Bus Transceiver erzeugt und bildet die differentiellen Signalpegel des CAN-Busses auf logische Pegel ab. Ein analoges Filter, das eine erste Stufe darstellt, dient zur Störpulsunterdrückung. Zu diesem Zweck schließt ein logischer 1-Pegel des Eingangssignals einen Schalter 1, so dass ein Kondensator 2 über eine erste Stromquelle 3 für die Dauer des 1-Pegels aufgeladen wird. Der Kondensator 2 wird in entsprechender Weise durch einen logischen 0-Pegel des Eingangssignals, bei dem der Schalter 1 geöffnet ist, über eine zweite Stromquelle 4 entladen.

Die an dem Kondensator 2 aufgebaute Spannung wird mit einem oberen und einem unteren Schwellwert UP_THR, LO_THR verglichen. Hierzu sind zwei aus jeweils einem Operationsverstärker geschaltete Komparatoren 5, 6 vorgesehen, wobei die Kondensatorspannung an eine Verbindung zwischen einem nichtinvertierenden und einem invertierenden Eingang des ersten bzw. zweiten Operationsverstärkers geführt ist und der obere Schwellwert an dem invertierenden Eingang des ersten Operationsverstärkers und der unteren Schwellwert an dem nichtinvertierenden Eingang des zweiten Operationsverstärkers in Form von entsprechenden Spannungspegeln anliegt.

Der Ausgang des ersten Operationsverstärkers bzw. Komparators 5 ist mit einem Setzeingang S eines ersten RS-Flip-Flops 7 verbunden, während der Ausgang des zweiten Operationsverstärkers bzw. Komparators 6 an einem Rücksetzeingang R dieses RS-Flip-Flops 7 anliegt.

Wenn die Kondensatorspannung den oberen Schwellwert UP_THR erreicht, schaltet der erste Komparator 5 um und bringt das erste RS-Flip-Flop 7 zum Kippen, das heißt das an seinem Ausgang Q anliegende Signal RX_FLTR nimmt einen logischen 1-Pegel an. Wenn im umgekehrten Fall die Kondensatorsspannung den unteren Schwellwert LO_THR erreicht, schaltet der zweite Komparator 6 um und setzt das RS-Flip-Flop 7 zurück, so dass dessen Ausgangssignal RX_FLTR einen logischen 0-Pegel annimmt.

Die beiden Schwellwerte haben eine relativ große Spannungsdifferenz, durch die zusammen mit der Kapazität des Kondensators 2 sowie den über die Stromquellen 3, 4 fließenden Strömen eine minimale Filterzeit "tmin" in der Weise vorgegeben wird, dass Störpulse am ersten Eingang E1 aufgrund ihrer schnellen Änderung die Spannung am Kondensator 2 nicht weit genug auf- bzw. entladen können, um ein Schalten der Komparatoren 5, 6 und damit eine Veränderung des am Ausgang des RS-Flip-Flops 7 anliegenden Signals RX_FLTR zu bewirken.

Mit der zweiten Stufe wird festgestellt, ob das Eingangssignal eine bestimmte Mindestanzahl von gültigen Pegeländerungen aufweist. Zu diesem Zweck werden die fallenden Flanken des Ausgangssignals RX_FLTR des ersten RS-Flip-Flops 7 mit einem aus zwei D-Flip-Flops 8, 9, einem NOR-Gatter 10 und einem ersten UND-Gatter 11 in üblicher Weise verschalteten Zähler gezählt. Bei einem Zählwert von "3" wird ein am Ausgang des ersten UND-Gatters 11 anliegendes Zähler-Ausgangssignal SET_CAN_WU auf logischen 1-Pegel gesetzt.

Mit einer dritten Stufe wird schließlich geprüft, ob der zeitliche Abstand dieser gültigen Pegeländerungen einen zulässigen maximalen Wert nicht überschreitet. Zu diesem Zweck ist ein Monoflop 12 vorgesehen, dessen Eingang durch das Ausgangssignal RX_FLTR des ersten RS-Flip-Flops 7 getriggert wird und dessen Ausgang mit den Rücksetzeingängen der beiden D-Flip-Flops 8, 9 verbunden ist. Die Zeitkonstante des Monoflops stellt dabei die maximale Zeit "tchange" dar, die verstreichen darauf, bis eine neue gültige Pegeländerung auftritt. Wenn diese Zeit unterschritten wird, wird das Monoflop 12 durch das Ausgangssignal RX_FLTR neu getriggert, so dass sein Ausgangssignal WU_WIN auf logischem 1-Pegel bleibt. Wenn jedoch das Monoflop vor Ablauf seiner Zeitkonstante nicht getriggert wird, schaltet sein Ausgangssignal WU_WIN auf logischen 0-Pegel, wodurch die beiden D-Flip-Flops 8, 9 und damit der Zähler zurückgesetzt werden und ein neuer Zählvorgang beginnt.

Diese Schaltungsanordnung wird über den CAN-Controller des CAN Busses (nicht dargestellt) manuell oder automatisch aktiviert (d.h. in einen Aufwachmodus geschaltet), bevor der Fahrer die Zündung abschaltet. Wenn die Zündung wieder eingeschaltet und der CAN Bus dadurch in Betrieb gesetzt wird, ist die Schaltung nicht mehr erforderlich, so dass sie über den Controller wieder deaktiviert wird.

Zu diesem Zweck weist die Schaltung einen zweiten und einen dritten Eingang E2, E3 auf, an denen ein Aktivierungssignal EN_CAN_WU bzw. ein Deaktivierungssignal DIS_CAN_WU anliegt. Das Aktivierungssignal wird über einen ersten Inverter 13 an einen Setzeingang S eines zweiten RS-Flip-Flops 14 geführt, während das Deaktivierungssignal über einen zweiten Inverter 15 an einen Rücksetzeingang R dieses zweiten RS-Flip-Flops 14 angelegt wird. Das Ausgangssignal CAN_WUEN des zweiten RS-Flip-Flops 14 wird über ein zweites UND-Gatter 16 mit dem Ausgangssignal SET_CAN_WU des Zählers verknüpft und beaufschlagt ein drittes RS-Flip-Flop 17, dessen Ausgangssignal CAN_WU an dem Ausgang A der Schaltungsanordnung anliegt und den ABS-Regler aktiviert.

Das dritte RS-Flip-Flop 17 kann schließlich durch den Controller mit einem Signal CLR_CAN_WU über einen vierten Eingang E4, der über einen dritten Inverter 18 mit dem Rücksetzeingang R des dritten RS-Flip-Flops 17 verbunden ist, zurückgesetzt werden.

Über einen fünften Eingang E5 der Schaltung wird schließlich ein Rücksetzsignal POR zugeführt, mit dem der erste, zweite und dritte Inverter 13, 15, 18 beim Einschalten der Spannung zurückgesetzt werden.

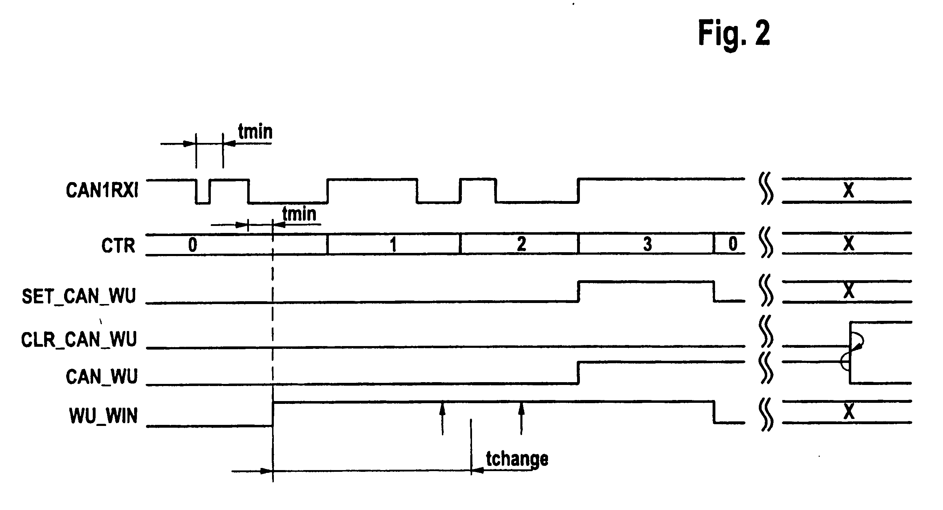

Figur 2 zeigt für ein beispielhaftes erstes Eingangssignal CAN1RXI die zeitlichen Verläufe der wichtigsten Signale in dieser Schaltung, und zwar des Zählerstandes CTR, des Ausgangssignals SET_CAN_WU des Zählers, des Rücksetzsignals CLR_CAN_WU für die Schaltung, des Ausgangssignals CAN_WU der Schaltung sowie des Ausgangssignals WU_WIN des Monoflops 12.

Weiterhin ist an dem ersten Eingangssignal die minimale Filterzeit "tmin" eingetragen, für die ein logischer 1- oder 0-Pegel mindestens vorhanden sein muß, um den Kondensator 2 wie eingangs beschrieben bis an den oberen bzw. unteren Schwellwert auf- bzw. entladen zu können. Schließlich ist auch die zwischen zwei zu zählenden Impulsen maximal zulässige Zeitdauer "tchange" eingetragen.

Demnach werden mit dem Zähler die steigenden Flanken derjenigen Impulse des Eingangssignals CAN1RXI gezählt, die länger sind, als die minimale Filterzeit "tmin". Bei jeder dritten Flanke erzeugt der Zähler das Ausgangssignal SET_CAN_WU, das in dem Fall, in dem das Ausgangssignal WU_WIN des Monoflops 12 den Zähler nicht aufgrund eines zu großen Zeitabstandes der Flanken vorzeitig zurückgesetzt hat, über das dritte RS-Flip-Flop 17 zur Aktivierung des ABS-Reglers als Ausgangssignal CAN_WU (mit logischem 1-Pegel) am Ausgang A der Schaltung zur Verfügung steht. Die Schaltung kann dann mit dem Rücksetzsignal CLR_CAN_WU wieder zurückgesetzt werden, wodurch das Ausgangssignal CAN_WU wieder seinen logischen 0-Pegel annimmt.

## Patentansprüche

1. Schaltungsanordnung zur Aktivierung eines Steuergerätes wie eines ABS-Reglers über einen CAN-Bus bei abgeschalteter Zündung, mit einem ersten Eingang (E1) für ein logisches Aktivierungssignal (CAN1RXI) für das Steuergerät und einer Einrichtung zur Erzeugung eines das Steuergerät aktivierenden Ausgangssignals (CAN_WU), wenn innerhalb einer vorbestimmbaren Zeitdauer eine vorbestimmbare Anzahl von Aktivierungssignalen erfasst wird,
**gekennzeichnet durch**
ein Eingangsfilter zur Unterdrückung von Störimpulsen in dem Aktivierungssignal, wobei das Eingangsfilter eine Filterzeit aufweist, **durch** die Störimpulse mit einer gegenüber einem logischen Pegel des Aktivierungssignals kurzer Dauer herausgefiltert werden.

2. Schaltungsanordnung nach Anspruch 1, **gekennzeichnet durch** einen CAN-Bus Transceiver, mit dem das logische Aktivierungssignal aus einem differentiellen CAN-Bussignal erzeugt wird.

3. Schaltungsanordnung nach Anspruch 1 oder 2, **dadurch gekennzeichnet, dass** das Eingangsfilter eine erste und eine zweite Stromquelle (3, 4) und einen Kondensator (2) aufweist, der in Abhängigkeit von dem logischen Pegel des Aktivierungssignals über die erste oder zweite Stromquelle auf- bzw. entladen wird, sowie einen ersten und einen zweiten Komparator (5, 6) umfaßt, mit dem ein erstes Flip-Flop (7) gesetzt oder rückgesetzt wird, wenn die Kondensatorspannung einen oberen bzw. unteren Schwellwert (UP_THR; LO_THR) erreicht.

4. Schaltungsanordnung nach einem der vorhergehenden Ansprüche,**dadurch gekennzeichnet, dass** die Einrichtung zur Erzeugung des aktivierenden Ausgangssignals (CAN_WU) einen Zähler (8, 9, 10, 11) sowie ein Monoflop (12) umfaßt, die von einem gültigen logischen Aktivierungssignal beaufschlagt werden, wobei der Zähler nach jedem dritten Aktivierungssignal das Ausgangssignal erzeugt und durch das Monoflop nach Ablauf der vorbestimmbaren Zeitdauer zurückgesetzt wird.

5. Schaltungsanordnung nach einem der vorhergehenden Ansprüche, **gekennzeichnet durch** einen zweiten Eingang (E2) für ein die Schaltungsanordnung aktivierendes Signal (EN_CAN_WU), sowie einen dritten Eingang (E3) für ein die Schaltungsanordnung deaktivierendes Signal (DIS_CAN_WU), wobei der zweite Eingang mit einem Setzeingang eines zweiten RS-Flip-Flops (14) und der dritte Eingang mit einem Rücksetzeingang des zweiten RS-Flip-Flops verbunden ist und der Ausgang des zweiten RS-Flip-Flops (14) mittels eines zweiten UND-Gatters (16) mit dem Ausgangssignal des Zählers verknüpft wird.

6. Schaltungsanordnung nach Anspruch 5, **gekennzeichnet durch** ein drittes RS-Flip-Flop (17), dessen Setzeingang mit dem Ausgang des zweiten UND-Gatters (16) und dessen Rücksetzeingang mit einem vierten Eingang (E4) der Schaltung verbunden ist, an den ein Rücksetzsignal (CLR_CAN_WU) für die Schaltungsanordnung angelegt werden kann, wobei des Ausgang des dritten RS-Flip-Flops (17) mit einem Ausgang (A) der Schaltungsanordnung verbunden ist.

## Claims

1. Circuit for activating a control unit such as an ABS controller by way of a CAN bus, with the ignition turned off, including a first input (E1) for a logic activation signal (CAN1RX1) for the control unit and a device for producing an output signal (CAN_WU) that activates the control unit when a predeterminable number of activation signals is recorded within a predeterminable period of time,
**characterized by** an input filter for suppressing disturbing pulses in the activation signal, the input filter having a filter time by which disturbing pulses with a duration that is short compared to a logical level of the activation signal are filtered out.

2. Circuit as claimed in claim 1,
**characterized by** a CAN bus transceiver that is used to produce the logical activation signal from a differential CAN bus signal.

3. Circuit as claimed in claim 1 or claim 2,
**characterized in that** the input filter includes a first and a second current source (3, 4) and a capacitor (2) which is charged or discharged by way of the first or second current source in dependence on the logical level of the activation signal, as well as a first and a second comparator (5, 6) by which a first flip-flop (7) is set or reset when the capacitor voltage reaches a top or bottom threshold value (UP_THR; LO_THR), respectively.

4. Circuit as claimed in any one of the preceding claims,
**characterized in that** the device for producing the activating output signal (CAN_WU) comprises a counter (8, 9, 10, 11) and a monoflop (12) to which is applied a current logic activation signal, wherein the counter after each third activation signal produces the output signal and is reset by the monoflop after expiry of the predeterminable period of time.

5. Circuit as claimed in any one of the preceding claims,
**characterized by** a second input (E2) for a signal (EN_CAN_WU) activating the circuit, as well as a third input (E3) for a signal (DIS_CAN_WU) deactivating the circuit, wherein the second input is connected to a set input of a second RS flip-flop (14), and the third input is connected to a reset input of the second RS flip-flop, and the output of the second RS flip-flop (14) is linked to the output signal of the counter by means of a second AND gate (16).

6. Circuit as claimed in claim 5,
**characterized by** a third RS flip-flop (17) whose set input is connected to the output of the second AND gate (16) and whose reset input is connected to a fourth input (E4) of the circuit, to which a reset signal (CLR_CAN_WU) for the circuit can be applied, wherein the output of the third RS flip-flop (17) is connected to an output (A) of the circuit.

## Revendications

1. Circuit pour activer un appareil de commande tel qu'un régulateur ABS par un bus CAN lorsque l'allumage est coupé, comportant une première entrée (E1) pour un signal d'activation logique (CAN1RXI) pour l'appareil de commande ainsi qu'un dispositif pour produire un signal de sortie (CAN_WU) activant l'appareil de commande si à l'intérieur d'un laps de temps à prédéterminer un nombre à prédéterminer de signaux d'activation est détecté,
**caractérisé par**
un filtre d'entrée pour supprimer les impulsions parasites dans le signal d'activation, le filtre d'entrée présentant un temps de filtrage par lequel les impulsions parasites sont filtrées avec une durée plus courte par rapport à un niveau logique du signal d'activation.

2. Circuit selon la revendication 1, **caractérisé par** un récepteur-émetteur de bus CAN au moyen duquel le signal d'activation logique est produit à partir d'un signal de bus CAN différentiel.

3. Circuit selon la revendication 1 ou 2, **caractérisé en ce que** le filtre d'entrée comporte une première et une deuxième source de courant (3, 4) ainsi qu'un condensateur (2) qui est chargé ou déchargé par la première ou la deuxième source de courant en fonction du niveau logique du signal d'activation, et comprend aussi un premier et un deuxième comparateur (5, 6) par lesquels est activée ou réinitialisée une première bascule (7) lorsque la tension du condensateur atteint une valeur de seuil supérieure ou inférieure (UP_THR ;LO_THR).

4. Circuit selon l'une des revendications précédentes, **caractérisé en ce que** le dispositif pour produire le signal de sortie d'activation (CAN_WU) comprend un compteur (8, 9, 10, 11) ainsi qu'une bascule monostable (12) qui reçoit un signal d'activation logique valable, le compteur produisant le signal de sortie après un signal d'activation sur trois, et étant réinitialisé par la bascule monostable à l'expiration du laps de temps à déterminer.

5. Circuit selon l'une des revendications précédentes, **caractérisé par** une deuxième entrée (E2) pour un signal (EN_CAN EN WU) activant le circuit, ainsi que par une troisième entrée (E3) pour un signal (DIS_CAN_WU) désactivant le circuit, la deuxième entrée étant reliée à une entrée d'activation d'une deuxième bascule RS (14) et la troisième entrée à une entrée de réinitialisation de la deuxième bascule RS, et la sortie de la deuxième bascule RS (14) est corrélée, au moyen d'une deuxième porte ET (16), au signal de sortie du compteur.

6. Circuit selon la revendication 5, **caractérisé par** une troisième bascule RS (17) dont l'entrée d'activation est reliée à la sortie de la deuxième porte E (16) et dont l'entrée de réinitialisation est reliée à une quatrième entrée (E4) du circuit, à laquelle peut s'appliquer un signal de réinitialisation (CLR_CAN_WU) pour le circuit, la sortie de la troisième bascule RS (17) étant reliée à une sortie (A) du circuit.
